# EUROPEAN PATENT APPLICATION

(11) **EP 4 560 792 A1**
(43) Date of publication of application: **28.05.2025**
(21) Application number: 24815823.0
(22) Date of filing: 27.05.2024
(51) Int. Cl.: H01M 10/6556, H01M 10/613, H01M 10/6566, H01M 10/6568

(54) **HEAT SINK ASSEMBLY**

(30) Priority: 02.06.2023 KR 20230071929
(71) Applicant: LG Energy Solution, Ltd., Seoul 07335 (KR)
(72) Inventor: HUR, Nam Hoon, Daejeon 34122 (KR); SHIN, Ju Hwan, Daejeon 34122 (KR); KIM, Ki Young, Daejeon 34122 (KR); LEE, Sang Yoon, Daejeon 34122 (KR); LEE, Hyoung Suk, Daejeon 34122 (KR)
(74) Representative: Plasseraud IP
(86) International application number: PCT/KR2024/007147
(87) International publication number: WO 2024/248447

(57) **Abstract**

A heat sink assembly including a plurality of heat sinks having a plurality of ribs integrally molded along an internal length direction by extrusion molding, the spaces between the ribs forming a flow path through which a coolant flows, the first and second surfaces at both ends of the length direction being open, and the plurality of heat sinks having communication ports on one side wall adjacent to the first surface and/or the second surface is provided The plurality of heat sinks are integrally formed with the side walls forming bonding surfaces to match the communication ports and forming a heat sink module. The overall flow path of the heat sink module is fluidly connected by a communication port. The ribs of the heat sink having a length such that both ends are spaced apart from the first and second surfaces by a predetermined distance, and the open first and second surfaces of both ends of the heat sink module are closed by a pack frame.

## Description

### [Technical Field]

The present disclosure relates to a heat sink assembly mounted to a bottom surface of a battery pack having a plurality of secondary batteries to facilitate heat dissipation of the battery pack.

This application claims the benefit of priority to Korean Patent Application No. 10-2023-0071929, filed on June 2, 2023, the disclosure of which is incorporated herein by reference in its entirety.

### [Background Art]

Secondary batteries, unlike primary batteries, are rechargeable and have been widely researched and developed in recent years due to the potential for miniaturization and large capacity. The demand for secondary batteries as an energy source is increasing rapidly due to the increasing technological development and demand for mobile devices, as well as electric vehicles and energy storage systems that are emerging in response to environmental protection needs.

Secondary batteries are categorized into coin type batteries, cylindrical batteries, prismatic batteries, and pouch type batteries according to the shape of the battery case. In a secondary battery, an electrode assembly mounted inside the battery case is a chargeable and dischargeable power generating device comprising a stacked structure of electrodes and separators.

Since secondary batteries are demanded to be used continuously for a long period of time, it is necessary to effectively control the heat generated during the charging and discharging process. If the secondary battery is not properly cooled, the increase in temperature will cause an increase in current, which will again cause an increase in temperature, which will cause a chain reaction, eventually leading to the catastrophic condition of thermal runaway.

In order to effectively dissipate the heat generated by secondary batteries, heat sinks (also called cooling plates) through which coolant flows are widely used. The heat sink is mounted on the bottom surface of a group of secondary batteries, such as a battery pack mounting a plurality of secondary batteries and performs a cooling function by absorbing heat generated inside the pack with a coolant and releasing it to the outside.

Heat sinks can be divided into brazing heat sinks and extruded heat sinks according to their structure or manufacturing method. A brazing heat sink is a structure in which two plates are brazed together to form a flow path, which has a high degree of freedom in flow path design but has a disadvantage in structural rigidity due to material degradation. On the other hand, extruded heat sinks, which are manufactured as a continuum through extrusion molding, have an advantage in structural rigidity, but have the disadvantage that only straight flow paths can be realized, resulting in a large number of ports, and thus, pipes for connection take up space.

### [Summary]

### [Technical Problem]

The present disclosure is directed to providing a heat sink assembly that is an extruded heat sink and does not require a separate pipe for flow path formation, thereby occupying less space, and can improve differential pressure by reducing the number of components with a simplified flow path configuration.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a heat sink assembly. In one example, a heat sink assembly includes a plurality of heat sinks having a plurality of ribs integrally molded therein along a length direction by extrusion molding, the spaces between the plurality of ribs forming a flow path through which a coolant flows, the first and second surfaces at both ends of the length direction being open, and the plurality of heat sinks having communication ports on one side wall adjacent to the first surface and/or the second surface, wherein the plurality of heat sinks are integrally formed by the side walls forming a bonding surface to match the communication ports, and thereby forming each heat sink module, the overall flow path of the heat sink module is fluidly connected by the communication port, the plurality of rib of the heat sink having a length such that both ends of the plurality of rib are spaced apart from the first and second surfaces by a predetermined distance, and the open first and second surfaces of both ends of the heat sink module are closed by a pack frame.

In one aspect of the present disclosure, the pack frame is a pair of side frames, and the side frames are bonded by welding to both ends of the heat sink module.

The heat sink module may comprise ports connected to the flow path on the outermost heat sinks on both sides in the width direction of the heat sink module, respectively.

The port may be located in the space between the pack frame and the rib on the first surface or the second surface.

In addition, the port may be located in a diagonal direction with respect to the communication port.

In addition, each of the plurality of rib may be arranged such that the closer one end is to the port or communication port, the further the other end of the rib is from the first surface or the second surface.

Meanwhile, the heat sink assembly of the present disclosure may comprise a plurality of the heat sink modules, wherein the pack frame includes a center frame and a side frame, and a first surface or a second surface of two heat sink modules disposed outermost in the length direction are bonded to and closed to the side frame, and except for the two heat sink modules disposed outermost in the length direction, a first surface of any one heat sink module and a second surface of another heat sink module are bonded to and closed to the center frame.

The plurality of heat sink modules may be fluidly connected to each other to form an overall flow path.

For example, among the plurality of heat sink modules, an outlet port of one heat sink module is connected to an inlet port of another heat sink module, and the inlet port and the outlet port may be selected as the ports closest to each other on two adjacent heat sink modules.

Here, the two heat sink modules may be fluidly connected by a pipe member connecting the inlet port and the outlet port.

Alternatively, the two heat sink modules may be fluidly connected by a connection hole formed through the surface of each heat sink module to be connected to an internal flow path, and a cross plate enclosing the connection hole and sealing it from the outside.

According to an aspect, the connection hole and the cross plate may be disposed on a bottom surface of the heat sink module.

### [Advantageous Effects]

The heat sink assembly of aspects of the present disclosure, having the configuration as described above, has excellent structural rigidity because the heat sink is manufactured as a continuum by extrusion molding, meanwhile, by performing a machining processing on the length direction both ends and side walls of the ribs integrally formed in the heat sink, it becomes possible to form an internal flow path between the interconnected heat sinks, and to configure a cooling passage divided into an inlet and an outlet by closing the open surface of the end plug.

Accordingly, the heat sink assembly of aspects of the present disclosure, while having an extruded heat sink as a basic framework which is advantageous in structural rigidity, occupies less space by not requiring a separate pipe for forming the flow path, can improve the differential pressure by reducing the number of components with a simplified flow path configuration, and can easily expand the heat dissipation area by increasing the number of heat sinks being bonded.

However, the technical effects that can be obtained through the present disclosure is not limited to the above-described effects, and other effects not mentioned can be clearly understood by a person skilled in the art from the description of the disclosure described below.

### [Brief Description of the Drawings]

Because the following drawings attached to the present specification illustrate exemplary aspects of the present disclosure and serve to facilitate understanding of the technical idea of the present disclosure together with the detailed description of the disclosure described below, the present disclosure should not be limitedly interpreted on the basis of the drawings.
FIG. 1 is a drawing illustrating a heat sink assembly according to one aspect of the present disclosure.
FIG. 2 is a partial perspective view illustrating an internal structure of a heat sink.
FIG. 3 is a drawing illustrating a plurality of heat sinks bonded together.
FIG. 4 is a drawing illustrating coolant flow in the heat sink assembly of FIG. 1.
FIG. 5 is a drawing illustrating one aspect of a heat sink assembly including a center frame.
FIG. 6 is an enlarged view of "A" part of FIG. 5.
FIG. 7 is a drawing illustrating another aspect of a heat sink assembly including a center frame.
FIG. 8 is an enlarged bottom surface view of the "B" part of FIG. 7.
FIG. 9 is an exploded perspective view of FIG. 8.

### [Detailed Description]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween.In addition, in the present application, "on" may include not only a case of being disposed on an upper portion but also a case of being disposed on a lower portion.

The present disclosure relates to a heat sink assembly. In one example, a heat sink assembly includes first and second heat sinks having a plurality of ribs integrally molded along an internal length direction by extrusion molding, the spaces between the ribs forming a flow path through which a coolant flow, a plurality of heat sinks having open first and second surfaces at both ends of the length direction, and a communication port on one side wall adjacent the second surface, the plurality of heat sinks forming one heat sink module with the side walls forming a bonding surface to match the communication ports, wherein the overall flow path of the heat sink module is fluidly connected by the communication ports, and the ribs of the heat sinks have a length such that their ends are spaced apart from the first and second surfaces by a predetermined distance, and the open first and second surfaces of both ends of the heat sink module are closed by a pack frame.

The heat sink assembly of aspects of the present disclosure having the above configuration, wherein the heat sinks are manufactured as a continuum by extrusion molding to possess excellent structural rigidity, meanwhile, machining processing is performed on the length direction ends and side walls of the ribs integrally formed in the heat sinks to form an internal flow path between the interconnected heat sinks, and the end plugs close the open surfaces to form a cooling passage divided into an inlet and an outlet.

Accordingly, the heat sink assembly of aspects of the present disclosure, while having an extruded heat sink as a basic framework which is advantageous in structural rigidity, occupies less space by not requiring a separate pipe for forming the flow path, can improve differential pressure by reducing the number of components with a simplified flow path configuration, and can easily expand the heat dissipating area by increasing the number of bonded heat sinks.

Hereinafter, specific aspects of a heat sink assembly 10 according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### [first aspect]

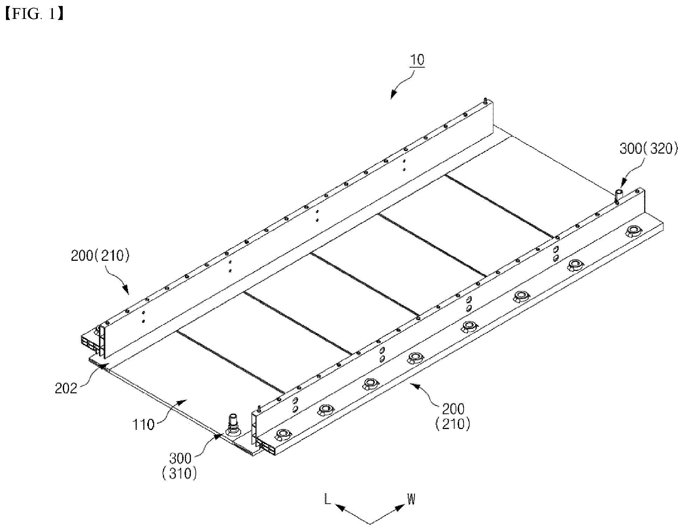

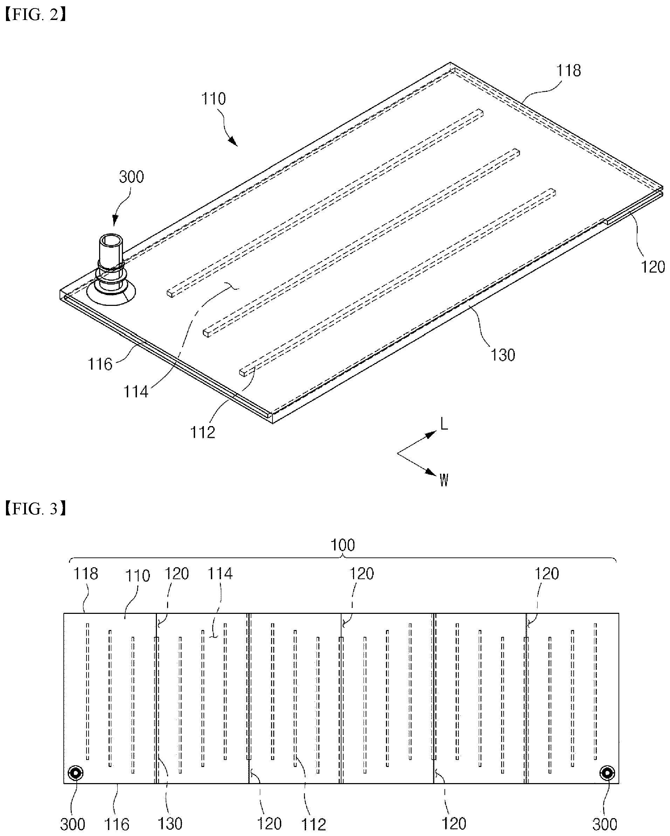

FIG. 1 is a drawing illustrating a heat sink assembly according to one aspect of the present disclosure, FIG. 2 is a partial perspective view illustrating an internal structure of a heat sink, and FIG. 3 is a drawing illustrating a plurality of heat sinks bonded together. With reference to the attached FIGS. 1 to 3, the heat sink assembly 10 of aspects of the present disclosure will be described in detail.

The heat sink assembly 10 of the present disclosure includes a heat sink module 100 having a plurality of heat sinks 110 bonded in a row, and a pack frame 200. An open surface of each heat sink 110 or heat sink module 100 is a face on either side of a length direction L. For ease of description, the two open surfaces will be referred to as a first surface 116 and a second surface 118, respectively. Here, the length direction L is defined as referring to the extrusion molding direction of the heat sink 110, in other words, the direction in which the ribs 112 extend, and the width direction W is defined as referring to the direction in which the plurality of ribs 112 are spaced apart and orthogonal to the length direction L in a plane.

All heat sinks 110 are manufactured with basically the same structure. For example, each heat sink 110 may be manufactured as an extrusion having a plurality of ribs 112 integrally molded therein along the length direction L through extrusion molding. A plurality of heat sinks 110 may be prepared by cutting an extrusion manufactured continuously by extrusion molding to a suitable length. In each heat sink 110, the space between the spaced apart ribs 112 forms an internal flow path 114 through which the coolant flows, and the first surface 116 and the second surface 118 at both ends of the length direction L are open due to the features of the extrusion.

The plurality of heat sinks 110 are integrally formed by having one side wall of the heat sinks 110 firmly bonded to each other by a coupling process, for example, friction stir welding. The plurality of heat sinks 110 are bonded one after another in one direction, the width direction W with reference to the drawings, and on the closed side walls coupling the heat sinks 110 to each other, in other words, on the bonding surface 130, machining processing is performed to form communication ports 120 for all of the heat sinks 110 prior to bonding. By the communication ports 120 provided on the bonding surface 130, the flow paths 114 of all heat sinks 110 forming one heat sink module 100 are mutually fluidly connected to each other. In other words, all flow paths 114 in the heat sink module 100 are connected in series, parallel, or in series-parallel to enable continuous flow of coolant.

FIG. 2 illustrates a structure in which the communication port 120 is formed by cutting a predetermined length inwardly from the end of the side wall on the second surface 118. In other words, with reference to the drawing, the communication port 120 is provided on one side wall adjacent to the second surface 118. Of course, it is possible to form the communication port 120 in the middle of the side wall, but to facilitate the flow of coolant between the heat sink 110, it may be desirable for the communication port 120 to be located at the end of the side wall.

Referring to the overall heat sink module 100, the communication ports 120 may be alternately disposed on the first surface 116 and the second surface 118 to form a zigzag shape. Referring to FIG. 3, the adjacent communication ports 120 along the width direction W are in a diagonal direction, which allows for an even flow of coolant across the overall heat sink module 100. In other words, by disposing the communication ports 120 in a zigzag shape, the heat transfer area of the heat sink module 100 can be maximized.

The communication ports 120 are provided as one or two per heat sink 110, according to the position occupied by each heat sink 110 in the heat sink module 100. In other words, as shown in FIG. 3, the heat sinks 110 are provided with a number of communication ports 120 corresponding to the number of adjacent heat sinks 110 bonded to them; thus, the outermost heat sinks 110 in the width direction W are provided with one communication port 120, and the heat sinks 110 between them are provided with two communication ports 120. When either heat sink 110 is provided with two communication ports 120, the two communication ports 120 are disposed one on the first surface 116 and one on the second surface 118.

As shown in FIG. 3, a pack frame 200 is bonded to the open first surface 116 and second surface 118 at both ends of the heat sink module 100, thereby sealing the heat sink module 100. The pack frame 200 is a frame forming part of a pack case in which a battery module, or battery block, is mounted, and forms a mechanical structure of the pack case to withstand a variety of loads. The pack frame 200 is provided with a bonding part 202 having a thickness corresponding to the height of the heat sink 110, and the bonding part 202 of the pack frame 200 and the first surface 116 and the second surface 118 of the heat sink 110 are bonded face-to-face. By enabling the welding depths of the abutted bonding part 202 and the friction stir welding performed up and down the heat sink 110 to overlap, a sealing can be completed in the up, down, left, and right directions of the first surface 116 and the second surface 118.

The rib 112 of the heat sink 110 has a length such that both ends thereof are spaced apart from the first surface 116 and the second surface 118 by a predetermined distance. Accordingly, a space of a certain volume is formed between the pack frame 200 and the first surface 116 and the second surface 118, in other words, this space is formed by machining processing that cuts the ends of the ribs 112 accessible through the first surface 116 and the second surface 118 to a predetermined length, and forms a shared space that is connected to each flow path 114 between the ribs 112.

In one aspect of the present disclosure, the pack frame 200 is a pair of side frames 210 that form the outer surface of the pack case, and the side frames 210 are welded and bonded to the open both ends of the heat sink module 100.

Further, the heat sink module 100 may have a pair of ports 300 on the outermost heat sinks 110 on both sides in the width direction W, each connected to an internal flow path 114. The pair of ports 300 constitute an inlet and an outlet for coolant to flow in and out, in other words, one port 300 is an inlet port 310 and the other is an outlet port 320. The pair of ports 300 is located in the space between the pack frame 200 and the rib 112 on the first surface 116 or the second surface 118, such that the coolant flowing in and out through the ports 300 is provided to all flow paths 114 through the inlet port 310, and the coolant passing through all flow paths 114 is collected and discharged through the outlet port 320.

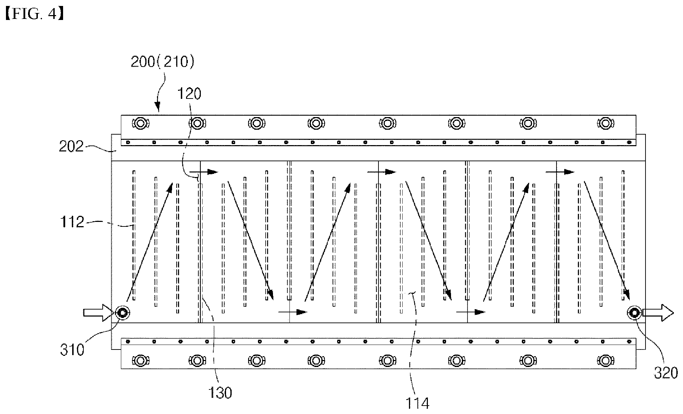

FIG. 4 is a drawing illustrating coolant flow in the heat sink assembly 10 of FIG. 1. Coolant entering the inlet port 310 flows one by one through the heat sink 110 along the width direction W and outlet port 320. The adjacent communication ports 120 are disposed in a zigzag shape, and the pair of ports 300 are also located in a diagonal direction with respect to the communication ports 120, so that the coolant can flow evenly throughout the heat sink module 100.

In addition, as shown in FIG. 3 and FIG. 4, while the overall length of each rib 112 is almost the same, the points at which both ends of each rib 112 are positioned may be formed differently; in other words, the rib 112 may be arranged such that one end of the rib further from the first surface 116 or the second surface 118, the closer the other end of the rib is to the ports 300 or the communication port 120 through which the coolant flows in and out from the outside or inside. This is to facilitate smooth flow of the coolant by largely providing space in the area where the coolant is collected and flowing in and out. Such variation in the structure of the rib 112 is produced by adjusting the machining depth of the cutting tool approaching through the first surface 116 and the second surface 118.

### [second aspect]

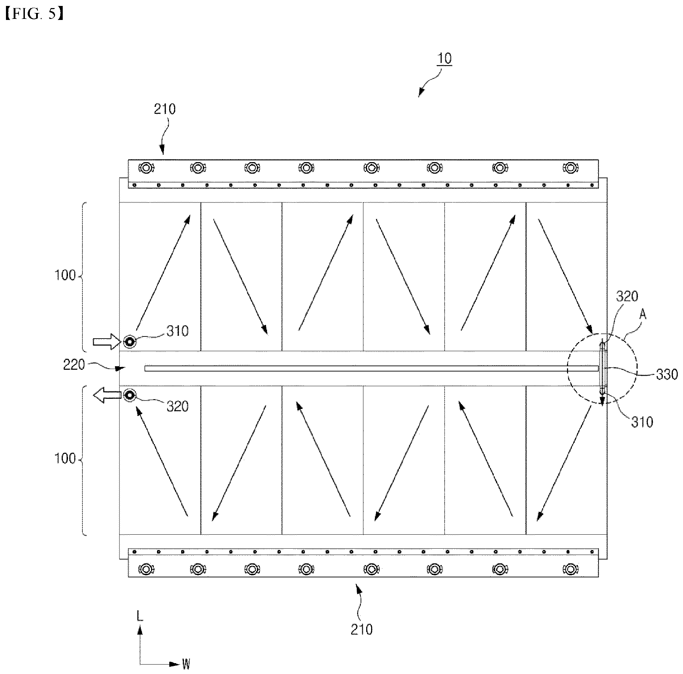

FIG. 5 is a drawing illustrating one aspect of a heat sink assembly 10 including a center frame 220. The aspect of FIG. 5 is to describe a case where the heat sink module 100 comprises a plurality of heat sink modules. While the drawings illustrate an example of a case where the heat sink module 100 comprises two heat sink modules, it will be readily understood that the heat sink assembly 10 can be configured with three or more heat sink modules 100 by increasing the number of center frames 220.

Referring to FIG. 5, the heat sink assembly 10 comprises two heat sink modules 100. The pack frame 200 includes a center frame 220 and a side frame 210, wherein the center frame 220 refers to the pack frame 200 that traverses the inside of the heat sink assembly 10. In contrast, the side frames 210 are pack frames 200 that form the exterior of the heat sink assembly 10.

Among the two heat sink modules 100, one heat sink module 100 is closed by having its first surface 116 bonded to the center frame 220, and the other heat sink module 100 is closed by having the second surface 118 bonded to the center frame 220. In other words, the heat sink modules 100 are bonded one by one on both sides of the length direction L with the center frame 220 in the center. Meanwhile, the second surface 118 and the first surface 116 of each heat sink module 100, which are located at the outermost edge with respect to the length direction L, are bonded to the side frame 210 and closed. By applying the center frame 220, the heat sink assembly 10 extended in the length direction L is structurally well load-bearing.

Moreover, while the plurality of heat sink modules 100 may comprise independent coolant flow paths 114, the plurality of heat sink modules 100 may be fluidly connected to each other so that the overall flow paths 114 are connected to each other to increase space utilization by reducing the number of pipes for forming the flow paths 114.

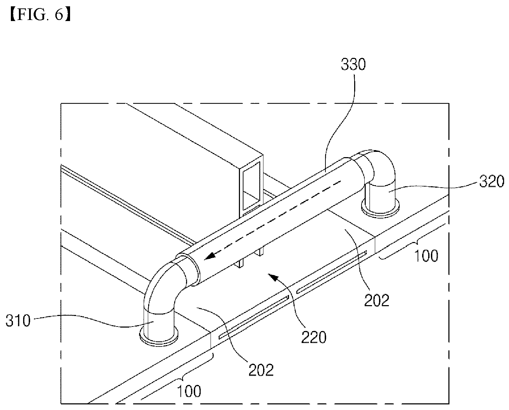

FIG. 6 is an enlarged view of "A" part of FIG. 5, wherein two heat sink modules 100 are fluidly connected by a pipe member 330 connecting an inlet port 310 and an outlet port 320. In other words, the outlet port 320 of one heat sink module 100 is connected to the inlet port 310 of the other heat sink module 100 so that their respective internal flow paths 114 are connected to each other. Accordingly, the overall heat sink assembly 10 substantially maintains the number of ports 300 as two, with one inlet port 310 and one outlet port 320.

When fluidly connecting two heat sink modules 100, it may be desirable to shorten the pipe member 330 to improve differential pressure and save space. Accordingly, the inlet port 310 and outlet port 320 that are connected to each other by the pipe member 330 may be selected to be the ports 300 that are closest in distance to each other on two adjacent heat sink modules 100.

### [third aspect]

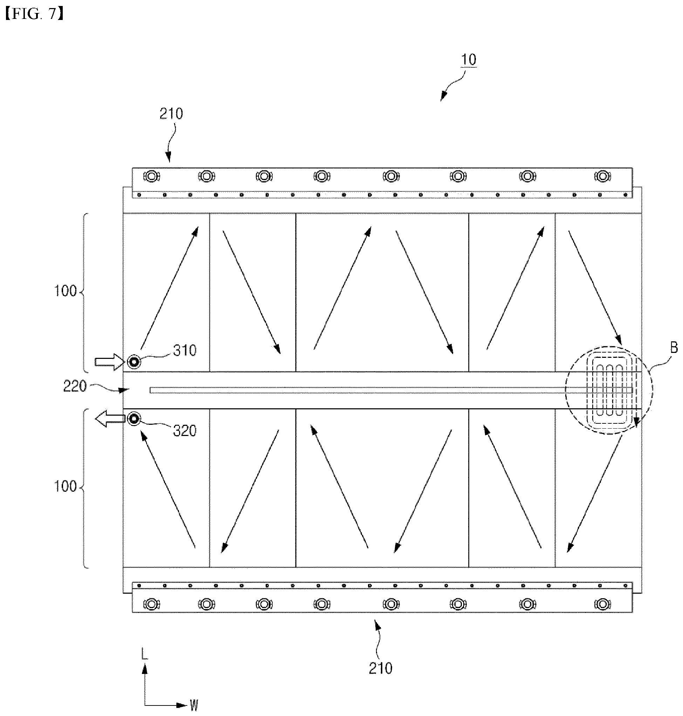

FIG. 7 is a drawing illustrating another aspect of the heat sink assembly 10 including a center frame 220. The difference from the second aspect described with reference to FIG. 5 and FIG. 6 is in the structure that fluidly connects the two heat sink modules 100. Therefore, the third aspect will be described centered on such fluid connection structure, and reference will be made to the second aspect for configurations that are omitted due to redundancy.

The heat sink assembly 10 of FIG. 7 does not show a structure for fluidly connecting the two heat sink modules 100, because the fluid connection structure is provided on the bottom surface of the heat sink assembly 10. Of course, it is possible to dispose the fluid connection structure of the third aspect on the upper surface, but it may be desirable to hide the fluid connection structure to the bottom from the viewpoint of maximizing the battery mounting space, avoiding interference, and protecting it from the outside.

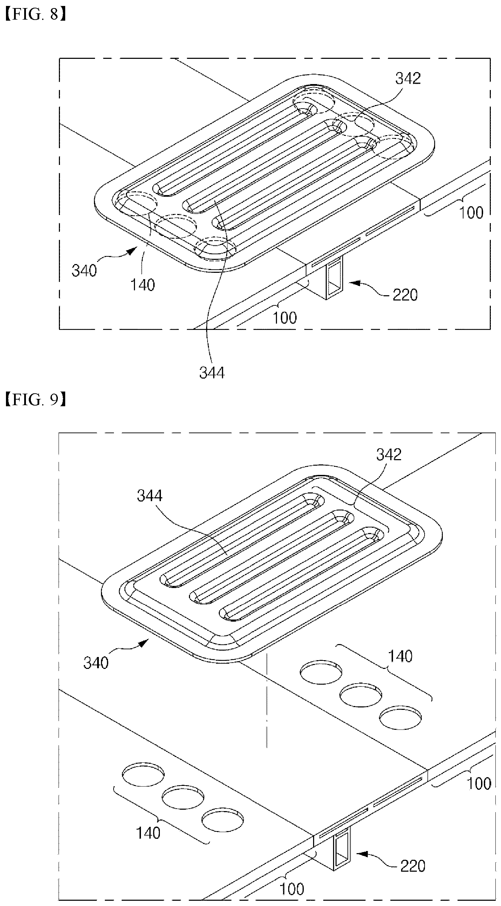

FIG. 8 is a bottom surface enlargement view of the "B" part shown in FIG. 7, and FIG. 9 is an exploded perspective view of FIG. 8. As shown in FIGS. 8 and 9, the two heat sink modules 100 include a connection hole 140 formed through the surface of each heat sink module 100 to connected to the internal flow path 114, and a cross plate 340 that surrounds the connection hole 140 and seals it from the outside. As described above, the connection hole 140 and the cross plate 340 are disposed on a bottom surface of the heat sink module 100.

The flow path 114 of each heat sink module 100 is exposed to the outside by the connection hole 140 penetrating processing the surface, but the coolant flowing into and out of the connection hole 140 is sealed by the cross plate 340, which surrounds the connection hole 140 and seals it from the outside. The cross plate 340 is welded along the edge thereof with respect to the center frame 220 and the heat sink module 100. The cross plate 340 shown has a concavo-convex structure 342 aligned with the direction in which the coolant is traversed. The mechanical strength of the cross plate 340 is improved by the concavo-convex structure 342, and the welding strength can also be improved by performing additional welding along the concave surface 344 of the concavo-convex structure 342.

As aforementioned, the present disclosure has been described in more detail through the drawings and aspects. However, since the configuration described in the drawings or aspects described herein is merely one aspect of the present disclosure and do not represent the overall technical spirit of the disclosure, it should be understood that the disclosure covers various equivalents, modifications, and substitutions at the time of filing of this application.

### [Description of Reference Numerals]

10: heat sink assembly
100: heat sink module
110: heat sink
112: rib
114: flow path
116: first surface
118: second surface
120: communication port
130: bonding surface
140: connection hole
200: pack frame
202: bonding part
210: side frame
220: center frame
300: port
310: inlet port
320: outlet port
330: pipe member
340: cross plate
342: concavo-convex structure
344: concave surface
L: length direction
W: width direction

## Claims

1. A heat sink assembly comprising:
a plurality of heat sinks having a plurality of ribs integrally molded therein along a length direction, the spaces between the plurality of ribs forming a flow path through which a coolant flows, the first and second surfaces at both ends of the length direction being open, and the plurality of heat sinks having communication ports on a side wall adjacent to the first surface and/or the second surface,
wherein the plurality of heat sinks is integrally formed with the side walls forming bonding surfaces to match communication ports, thereby forming a heat sink module,
an overall flow path of the heat sink module is fluidly connected by the communication port,
the plurality of ribs of the heat sink having lengths such that both ends of a rib of the plurality of ribs are spaced apart from the first and second surfaces by predetermined distances, and
the open first and second surfaces at both ends of the plurality of heat sinks of the heat sink module are closed by a pack frame.

2. The heat sink assembly of claim 1, wherein the pack frame includes a pair of side frames bonded to both ends of the plurality of heat sinks of the heat sink module.

3. The heat sink assembly of claim 1, wherein the heat sink module comprises ports connected to the flow path on outermost heat sinks in the width direction of the heat sink module.

4. The heat sink assembly of claim 3, wherein the ports are located in spaces between a rib of the plurality of ribs and the pack frame on the first surface or the second surface.

5. The heat sink assembly of claim 4, wherein the ports are located diagonally with respect to the communication ports of the outermost heat sinks.

6. The heat sink assembly of claim 5, wherein each of the plurality of rib are arranged such that the closer one end of the rib is to the port or communication port, the closer the other end of the rib is from the first surface or the second surface.

7. The heat sink assembly of claim 1, comprising, a plurality of the heat sink modules,
wherein the pack frame includes at least one center frame and a pair of side frames, and
a first surface or a second surface of two heat sink modules disposed outermost of the plurality of heat sink modules in the length direction are bonded to and closed by one of the side frames of the pair of side frames, and
except for the two heat sink modules disposed outermost in the length direction, a first surface of any one heat sink module and a second surface of another heat sink module are bonded to and closed by one of the at least one center frame.

8. The heat sink assembly of claim 7, wherein heat sink modules of the plurality of heat sink modules are fluidly connected together to form an overall flow path.

9. The heat sink assembly of claim 8, wherein, among two adjacent heat sink modules of the plurality of heat sink modules,
an outlet port of one of the two heat sink modules is connected to an inlet port of the other of the two heat sink modules, and
the inlet port and the outlet port are near each other in the two adjacent heat sink modules.

10. The heat sink assembly of claim 9, wherein the two heat sink modules are fluidly connected by a pipe connecting the inlet port and the outlet port.

11. The heat sink assembly of claim 9, wherein the two heat sink modules are fluidly connected by connection holes formed through a third surface of each heat sink module of the two heat sink modules to be connected to an internal flow path, and a cross plate enclosing the connection holes and sealing the third surface of each heat sink module of the two heat sink modules from outside.

12. The heat sink assembly of claim 11, wherein the third surface is a bottom surface of each heat sink module of the two heat sink modules.
